# EUROPEAN PATENT APPLICATION

(11) **EP 1 396 785 A1**
(43) Date of publication of application: **10.03.2004**
(21) Application number: 02256119.5
(22) Date of filing: 03.09.2002
(51) Int. Cl.: G06F 3/14, G06F 3/12

(54) **Display interface and display system**

(71) Applicant: Nokia Corporation, 02150 Espoo (FI)
(72) Inventor: Piat, Jerome, Itabashi, Tokyo (JP); Hyytiainen, Ilkka, 02240 Espoo (FI)
(74) Representative: Higgin, Paul

(57) **Abstract**

A display system is provided in which a device, such as a mobile phone, incorporates a printer output port which can be used as a display port for an external display. An adapter is provided which converts print data signals representative of an image into display format signals in order to drive a display and provide the image upon the display. Generally, a display data set is consolidated in a memory device, such as a buffer, before presentation of the image upon the display.

## Description

The present invention relates to display systems and in particular display systems to present still images.

Devices such as mobile phones may include a built-in display as well as a printer output port whereby images can be printed. A schematic illustration marked "Prior Art" in the attached drawings illustrates a typical display system including a device 100. Thus, a processor 101 operates in accordance with an operating regime stored in a memory device 102. The processor 101 presents print data signals to a print driver 108 which in turn is connected to a printer output port 107 such that a printer 105 connected through a cable 106 is appropriately driven. The printer driver 108 provides printer specific format data signals optimised in order to drive the printer 105. The processor 101 also provides data signals through a display driver 104 such that a built in display 103 can present an image. Both the print driver 108 and display driver 104 will typically operate in accordance with an operating regime stored as software in the memory device 102.

Normally, the printer output port 107 is the only output port for the device 100. The display driver 104 is not connected to the printer output port 107 so that it is not possible to drive an external display through the output port 107. In any event, the display driver 104 will be optimised for the built in display 103 and would not generally be capable of driving an external display.

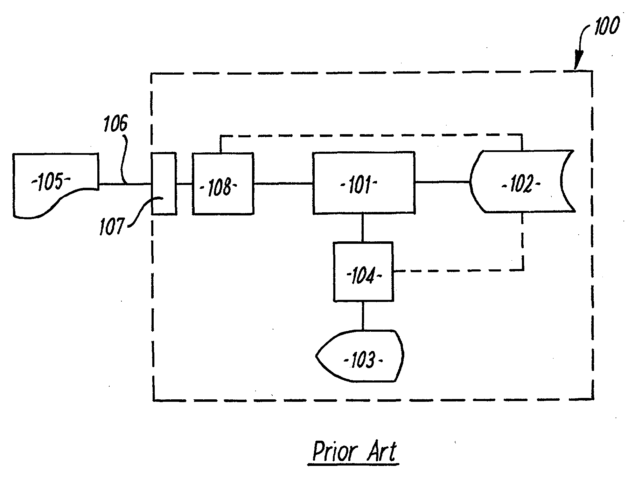

Fig. 1 of the attached drawings shows a schematic prior operating regime. The same reference numerals to that used with respect to the "Prior Art" illustration are used in order to improve clarity. Thus, a printing application in a processor 101 presents print data signals 1 to the print driver 108. The print driver 108 transposes these print data signals to a proprietor printer specific format such that printer driving signals 2 are presented to a printer 3. The printer driver signals 2 are not suitable for driving a display 4.

It should be appreciated from above that the prior art system 100 ("Prior Art" illustration) and the operating regime described with respect to Fig. 1 are not suitable for driving an external display where required.

In accordance with the present invention there is provided a display system comprising a source of print data signals for enabling a printer to print an image, the system characterised in that an adapter is configured to transform the print data signals to display signals in a display format suitable for controlling a display.

Also in accordance with the present invention there is provided a display system comprising means to drive a printer including a source of print data signals and a printer port, the system characterised in that an adapter is provided to transform print data signals to display signals in a display format to drive a display, the adapter connected to the printer port to enable that printer port to act as a display port for the system.

Preferably, the system includes means to consolidate an image as a display data set in the display format and representative of the image.

Also in accordance with the present invention there is provided an adapter for a display system, the adapter configured to transform print data signals for enabling a printer to print an image to a display format for controlling a display to display the image.

Alternatively, in accordance with the present invention there is provided a method of presenting on a display an image from print data signals, the method comprising presenting print data signals to an adapter whereby those print data signals are transformed to display signals in a display format and driving a display with said display signals to form an image upon that display representative of the print data signals presented to the adapter.

Possibly, the adapter includes a memory for a display data set comprising display data signals provided by transformation of the print data signals.

Typically, print data signals are provided in a print specific format such as CMYK or a printer proprietor format from a printer driver module for a particular printer type.

Typically, the display format is RGB or another vector defined format of colour modulation.

Possibly, the transformation of print data signals to the display format is through an algorithm. Alternatively, the transformation to the display format is through a lookup table.

Possibly, switching means is provided to allow different transformations as required between the print data signals format and the display format. The switching means may be used operable. Such switching means may relate to different necessary transformations between the particular format of the print data signals and the display format necessary to drive the display and/or resolution of the image and/or speed of transformation process and/or framing of the image.

Normally, the adapter is connected to a printer port of a device to allow that printer port to also act as an external display output for the device. Typically, the device will be a mobile phone, cellular phone or radio communication device. Alternatively, the adapter is connected to a display input port of a display or directly incorporated within that display.

Advantageously, the adapter is a discrete device readily associated with the system or device when required.

Possibly, the adapter is provided by operating regime software. Alternatively, the adapter is provided as a discrete unit connected to the system.

Embodiments of the present invention will now be described by way of example only with reference to the accompanying drawings in which:
Fig. 2 is a schematic illustration of an operating regime in accordance with a first embodiment of the present invention;
Fig. 3 is a more detailed schematic illustration of the first embodiment of the present invention depicted in Fig. 2;
Fig. 4 is a schematic illustration of a display system incorporating an adapter in accordance with the first embodiment of the present invention depicted in Figs. 2 and 3;
Fig. 5 is a schematic illustration of an operating regime in accordance with a second embodiment of the present invention;
Fig. 6 is a more detailed schematic illustration of the second embodiment of the present invention depicted in Fig. 5; and,
Fig. 7 is a schematic illustration of a display system incorporating an adapter in accordance with the second embodiment of the present invention depicted in Figs. 5 and 6.

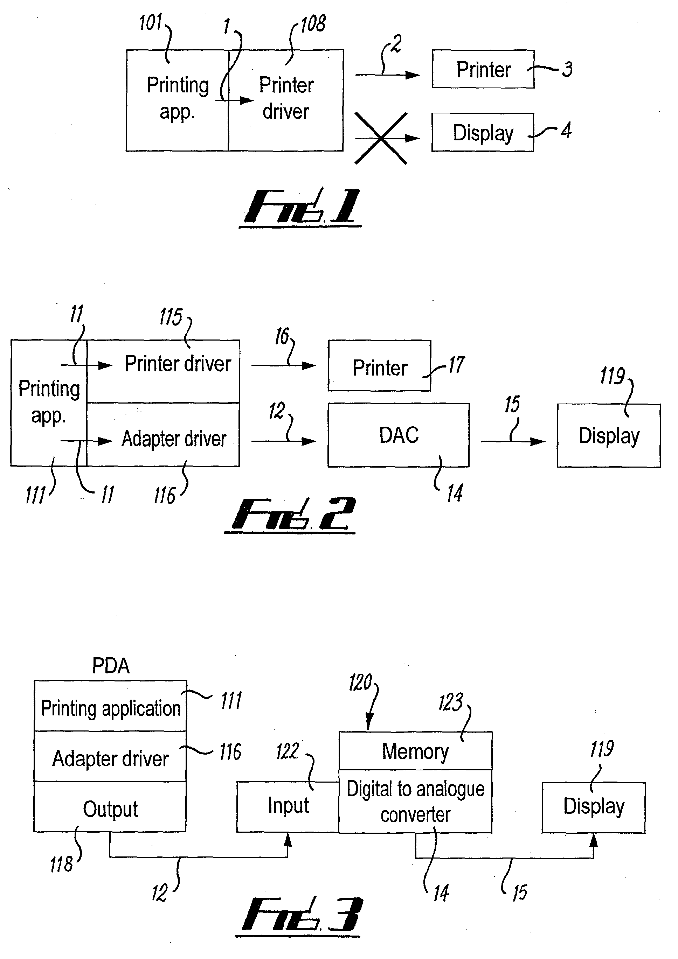

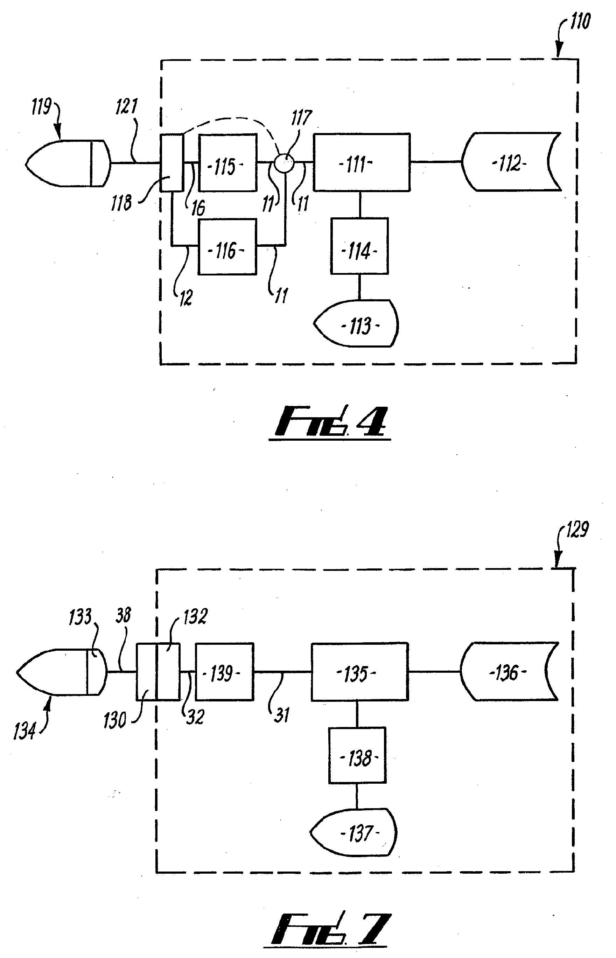

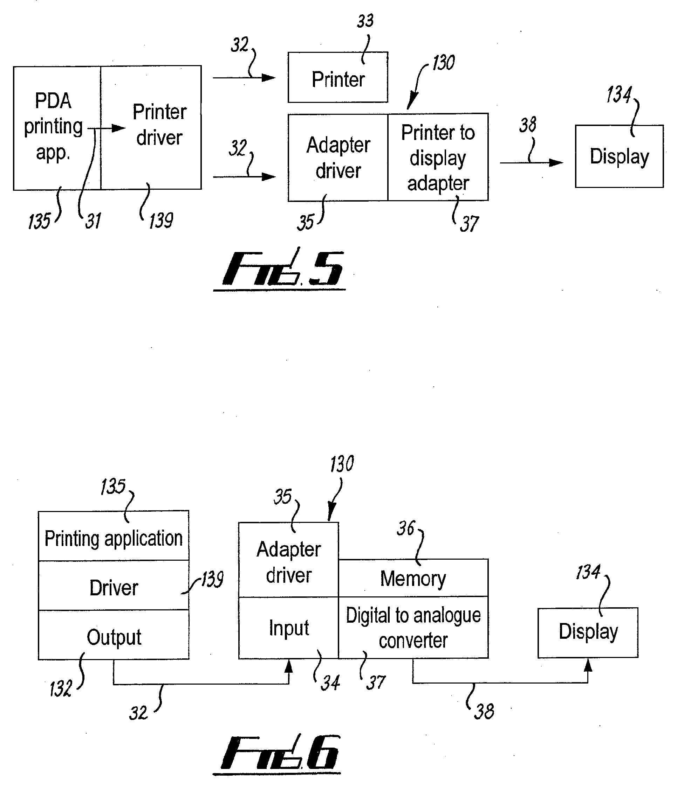

Referring to Figs. 2 to 4 which schematically illustrate a first embodiment of a display system in accordance with the present invention. A printing application in the processor 111 provides print data signals 11 to both a print driver 115 and an adapter driver 116 in accordance with the invention. A switch 117 (Fig. 4) is provided to ensure print data signals are only presented to the printer driver 115 or the adapter driver 116 as alternatives. The switch 117 may be constituted by a print option displayed and selectable by a user, possibly by reference to an options menu displayed through a built-in display 113 and driven by a display driver 114.

The print data signals 11 are presented by the printing application in the processor 111 to the adapter driver 116. This adapter driver 116 is seen as a printer driver by the processor 111. The adapter driver 116 receives the print data signals 11 and transforms those print data signals 11 into display signals 12 of an appropriate display format in order to eventually drive a display 119. The display signals 12 are communicated to an output port 118 which is normally the printer output port of the device 110. Typically, the display signal format is digital such that a digital to analogue converter 14 is provided. Thus, the display signals 12 are converted by the adapter 14 into analogue display signals 15 in order to drive the display 119.

It will be noted that the print data signals 11 can also be communicated to the print driver 115 by appropriate configuration of the switch 117 such that the driver 115 can drive a printer 17 (not shown) through the output port 118 when appropriately connected.

The display signals 12 as indicated above are presented through the output port 118 to the display 119 via a connection 121 and a display input arrangement 120. The arrangement 120 comprises an input 122 and the digital to analogue converter 14 along with normally a memory 123. The input 122 receives the display signals 12 from the output port 118. The memory 122 consolidates the display signals 12 to form a display data set normally representative of a whole image for display by the display 119. The digital to analogue converter 14 sequentially converts the display signals from the memory 122 such that appropriate analogue display driving signals 15 are presented to the display 119 in order to drive the display and present the image as required.

As indicated above, normally the memory 123 will store a whole image such that the display 119 can be appropriately refreshed and driven to maintain display of the image. In such circumstances, a set of print data signals representative of an image are transformed by the adapter driver 116 to form the display data set. The display signals 12 from the adapter driver 116 are stored in the memory 123 such that an image is displayed on the display 119 equivalent to an image which would be printed by the printer 17 from the print data signals.

Referring to Figs. 5 to 7 schematically illustrating a second embodiment of the present invention. A display system includes a device 129 which incorporates a processor 135 including a printing application. The processor 135 operates in accordance with an operating regime stored in a memory device 136 and includes a display driver 138 to drive a built-in display 137. The processor 138 presents print data signals 31 to a print driver 139. The print driver 139 converts these print data signals 31 into printer driving data signals 32 in a printer specific format for a printer 33. As illustrated in Fig. 5 these data signals 32 are arranged to drive the printer 33. These printer driving signals 32 are the print data signals utilised in the second embodiment of the invention to provide after transformation the display signals to drive the display 119.

In accordance with this embodiment of the present invention the data signals 32 from the driver 139 are presented to an output port 132 built in to the device 129. This output port 132 is the printer output port of the device 129. An adapter 130 is connected to the output port 132 such that an input 34 of the adapter 130 receives the data signals 32. The adapter 130 includes an adapter driver 35, a memory 36 and a digital to analogue converter 37 along with the input 34. The adapter driver 135 is seen as a printer driver by the processor 135 and receives the data signals 32 in order to convert them into display signals in a suitable display format. The memory 36 consolidates the display signals into a display data set representative of an image. The analogue to digital converter 37 converts the display signals into analogue display signals 38 suitable to drive a display 134.

Typically, the adapter 130 is a discrete plug in unit secured to the output port 132 and connected to the display 134 through a cable input connection 133 (Fig. 7).

It will be understood that the first embodiment of the present invention arranges for transformation from the print data signal 11 format to the display signal 12 format within the device 110 (Fig. 4) whilst the second embodiment of the present invention allows transformation to the display format to be conducted externally of the device 129 (Fig. 7) but utilising the existing printer output port 132. An adapter in accordance with the present invention could be provided by discrete elements of additional hardware or by reconfiguring the operating regime of a device to provide the necessary transform of the print data signals 11, 31 to the display format.

In the present invention print data signals 11, 31 are transformed to an appropriate display format to enable a display to be driven. The print data signals may be in a generic operating system format for input to a print driver or a printer specific format output from a printer driver for a particular printer type. In any event, an adapter in accordance with the present invention transforms the print data into the display format necessary. An example of a print data signal format is that known as CMY(K) or cyan magenta yellow (black). This CMY(K) format is used in printing and for hard copy output. An example of a display format is RGB or red green blue. A number of transforms are outlined below which show examples of transformations between format CMY(K) and format RGB.

| | |
|---|---|
| CMY(K) to CMY | Cyan = minimum (1, Cyan* (1-Black) + Black) |
| | Magenta = minimum (1, Magenta* (1-Black) + Black) |
| | Yellow = minimum (1, Yellow* (1-Black) + Black) |
| | |
| CMY to RGB | Red = 1-Cyan |
| | Green = 1-Magenta |
| | Blue = 1-Yellow |

Transformation between the print data format and the display format can be conducted through an algorithm or by use of a lookup table of equivalence.

The method of the present invention as indicated above principally involves provision of an adapter facilitating the transformation step between print data signal format and display signal format. This method may include an algorithm transformation or a lookup table or a combination of these procedures. Normally a whole image is consolidated in a memory device to allow appropriate driving of a display and possible error correction.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A display system comprising a source 111; 135 of print data signals for enabling a printer (17; 33) to print an image, the system **characterised in that** an adapter is configured to transform the print data signals (11; 32) to display signals (12, 15; 38) in a display format suitable for controlling a display (119; 134).

2. A system as claimed in claim 1 wherein the system includes means to consolidate an image as a display data set of display signals in the display format and representative of the image.

3. A system as claimed in claim 2 wherein the display data set is consolidated within a memory 123; 36 for appropriate stimulation of the display (119, 134).

4. A system as claimed in claim 1, 2 or 3 wherein the system includes a port normally for printer driving signals but **characterised in that** the port is reconfigurable to act as a display output port for the display signals.

5. A system as claimed in any preceding claim wherein the source of print data signals is a printer driver.

6. A system as claimed in any preceding claim wherein the print data signals are transformed to the display format through an appropriate algorithm.

7. A system as claimed in any of claims 1 to 5 wherein the print data signals are transformed to the display format through a lookup table.

8. A system as claimed in any preceding claim wherein the system includes means for user selection of the adapter to enable transformation of the print data signals to an appropriate display format.

9. A system as claimed in any preceding claim wherein switching means are provided to allow different transformations as required between the print data signals and the display format.

10. A system as claimed in claim 9 wherein the switching means is user operable and selectable.

11. A system as claimed in any preceding claim wherein the adapter is provided by software specifying the operating regime for the display system.

12. A system as claimed in any of claims 1 to 10 wherein the adapter is provided by a discrete unit connected to the display system.

13. An adapter for a display system, the adapter configured to transform print data signals for enabling a printer to print an image to a display format for controlling a display to display the image.

14. An adapter as claimed in claim 13 wherein the adapter includes a memory for a display data set of display signals representative of the image.

15. An adapter as claimed in claim 13 or 14 wherein the adapter in use is connected to a printer output port to allow the printer output port to act as a display output for a device.

16. An adapter as claimed in claim 15 wherein the adapter is a discrete unit secured to the printer output port.

17. An adapter as claimed in either claim 15 or 16 wherein the device is a mobile phone or radio communications device or cellular phone.

18. A method of presenting on a display an image from a source of print data signals, the method comprising taking print data signals, presenting those print data signals to an adapter whereby those print data signals are transformed to display signals in a display format, and driving a display with said display signals to form an image upon the display representative of the printer data signals presented to the adapter.

19. A method as claimed in claim 18 further including a step of consolidating display signals from the adapter to form a display data set of display signals representative of the image.

20. A display system comprising means to drive a display including a source of print data signals and a printer port, the system **characterised in that** an adapter is provided to transform print data signals to display signals in a display format to drive a display, the adapter connected to the printer port to enable the printer port to act as a display port for the system.

21. A system as claimed in claim 20 wherein the source of print data signals is a printer driver for a printer.

22. A system as claimed in claim 21 wherein the system includes means for user selection for connection of the adapter to the output port rather than the print driver.

23. Any novel subject matter or combination including novel subject matter disclosed herein, whether or not within the scope of or relating to the same invention as any of the preceding claims.
